# FASCICULE DE BREVET EUROPEEN

(11) **EP 3 166 285 B1**
(45) Date de publication et mention de la délivrance du brevet: **16.05.2018**
(21) Numéro de dépôt: 16197155.1
(22) Date de dépôt: 03.11.2016
(51) Int. Cl.: H04M 1/02, G09F 3/20, G09F 7/10, H04M 11/02, H05K 5/00

(54) **INTERPHONE ET SYSTÈME DE CONTROLE D'ACCES COMPORTANT CET INTERPHONE**
GEGENSPRECHANLAGE UND ZUGANGSKONTROLLSYSTEM, DAS ÜBER EIN SOLCHE GEGENSPRECHANLAGE VERFÜGT
INTERCOM AND ACCESS CONTROL SYSTEM COMPRISING SAID INTERCOM

(30) Priorité: 06.11.2015 FR 1560641
(43) Date de publication de la demande: 10.05.2017
(73) Titulaire: Cogelec, 85290 Mortagne-sur-Sèvre (FR)
(72) Inventeur: BEAUJOUR, Benoit, 49450 ST MACAIRE EN MAUGES (FR)
(74) Mandataire: Colombo, Michel

(56) Documents cités:
- EP-A1- 0 800 156
- EP-A1- 2 326 157

## Description

L'invention concerne un interphone pour une résidence et un système de contrôle d'accès utilisant cet interphone.

Des interphones connus comportent :
- une platine destinée à être exposée à l'extérieur de la résidence, cette platine protégeant l'accès à l'intérieur de l'interphone,
- un haut-parleur et un microphone logés dans cette platine,
- un porte-étiquette logé dans cette platine et comprenant :
   - au moins un bouton d'appel permettant de sélectionner un appartement situé à l'intérieur de la résidence et de déclencher l'établissement d'une communication vocale entre un visiteur situé devant l'interphone et un résident situé à l'intérieur de l'appartement par l'intermédiaire du haut-parleur et du microphone de l'interphone,
   - pour chaque appartement, un réceptacle comportant une paroi transparente, chaque réceptacle étant apte à recevoir de façon amovible derrière cette paroi transparente une étiquette en papier sur laquelle est inscrite un identifiant d'un appartement de la résidence.

Par exemple, un tel interphone est décrit dans la demande DE10340764. Cet interphone présente l'avantage d'utiliser de simples étiquettes en papier sur lesquelles sont inscrits les noms des résidents. Dès lors, un résident peut simplement fabriquer lui-même une nouvelle étiquette pour remplacer une ancienne étiquette.

Dans l'interphone de la demande DE10340764, la paroi transparente de chaque réceptacle est fixée sans aucun degré de liberté sur la platine. Dès lors, pour remplacer une étiquette, il faut démonter cette platine et donc ouvrir l'interphone pour avoir accès à l'intérieur des réceptacles dans lesquels sont logées les étiquettes. Pour cela, il faut généralement utiliser des outils spécifiques. Ces outils spécifiques sont de préférence peu répandus, de manière à rendre difficile l'ouverture de l'interphone par des personnes mal intentionnées qui voudraient commettre des actes de vandalisme.

Ainsi, bien qu'un résident puisse lui-même fabriquer la nouvelle étiquette, il n'est pas nécessairement en mesure de remplacer lui-même l'ancienne étiquette par la nouvelle étiquette car il faut alors qu'il dispose des outils spécifiques nécessaires à l'ouverture de l'interphone.

De plus, lors du remplacement de l'étiquette, le résident peut rentrer directement en contact avec les différents équipements électroniques de l'interphone et ainsi dégrader involontairement l'interphone.

La demande EP2326157A1 décrit un interphone équipé d'une étiquette métallique remplaçable, à la main et sans outil spécifique, par un résident. Toutefois, le mécanisme décrit pour faire cela n'est pas utilisable avec une étiquette en papier.

De l'état de la technique est également connu de EP0800156A1.

Ainsi, il est souhaitable d'améliorer les interphones existants pour permettre un remplacement d'une étiquette sans outil spécifique et sans que cela puisse occasionner des dégradations involontaires de l'interphone mais tout en préservant les avantages des interphones existants, c'est-à-dire notamment l'emploi d'étiquettes en papier.

L'invention vise à satisfaire ce souhait. Elle a donc pour objet un interphone conforme à la revendication 1.

Dans l'interphone ci-dessus, le volet est capable de se déplacer vers une position ouverte sans qu'il soit nécessaire pour cela d'accéder à l'intérieur de l'interphone. Il est donc possible de remplacer l'étiquette sans avoir à ouvrir l'interphone, contrairement à ce qui est prévu dans la demande DE10340764. De plus, chaque réceptacle comporte un fond qui l'isole mécaniquement de l'intérieur de l'interphone. Ainsi, dans l'interphone ci-dessus, il est possible de remplacer une étiquette sans avoir accès à l'intérieur de l'interphone. Dès lors, le remplacement d'une étiquette ne peut pas être l'occasion d'une dégradation accidentelle de l'interphone. En effet, les équipements électroniques situés à l'intérieur de l'interphone restent mécaniquement isolés de l'étiquette même pendant son remplacement.

Dans l'interphone ci-dessus, le déverrouillage du volet pour remplacer l'étiquette est provoqué par une commande électronique et non pas à l'aide d'un outil spécifique. Il n'est donc plus nécessaire d'utiliser de tels outils spécifiques tels qu'un tournevis ou une clé pour remplacer une étiquette.

Enfin, l'interphone ci-dessus préserve les avantages des interphones existants, c'est-à-dire notamment la possibilité d'utiliser une étiquette en papier.

Les modes de réalisation de cet interphone peuvent comporter une ou plusieurs des caractéristiques des revendications dépendantes.

Ces modes de réalisation de l'interphone présentent en outre les avantages suivants :
- L'utilisation d'un volet par réceptacle permet d'autoriser le remplacement sélectif d'une seule étiquette par le résident.
- Lorsque la fente qui reçoit l'étiquette est fixée sur la face arrière du volet, le déplacement de ce volet vers sa position ouverte rend non seulement le remplacement de l'étiquette possible mais facilite en plus l'accès à cette fente dans laquelle doit être reçue la nouvelle étiquette.
- L'utilisation d'un verrou électrique actionné par un filament en matériau à mémoire de forme permet d'obtenir un verrou très robuste vis-à-vis des vibrations et donc vis-à-vis des tentatives d'ouverture non autorisée en frappant avec un objet sur le volet.

L'invention a également pour objet un système de contrôle d'accès à une résidence.

L'invention sera mieux comprise à la lecture de la description qui va suivre, donnée uniquement à titre d'exemple non limitatif et faite en se référant aux dessins sur lesquels :
- la figure 1 est une illustration schématique d'un système de contrôle d'accès à une résidence comportant un interphone ;
- la figure 2 est une illustration schématique et en vue de côté de l'interphone du système de la figure 2 ;
- la figure 3 est une illustration schématique et partielle en vue de devant d'un porte-étiquette de l'interphone de la figure 2 ;
- la figure 4 est une illustration schématique partielle et en perspective d'un réceptacle d'une étiquette du porte-étiquette de la figure 3 ;
- la figure 5 est une illustration schématique et en vue de face d'un volet du réceptacle de la figure 4 ;
- les figures 6, 7 et 8 sont des illustrations schématiques en vue transversale du réceptacle de la figure 4 dans différentes positions de fonctionnement ;
- la figure 9 est un organigramme d'un procédé de fonctionnement du système de la figure 1 ;
- les figures 10 et 11 sont des illustrations schématiques d'autres modes de réalisation possibles d'un réceptacle pour une étiquette.

Dans ces figures, les mêmes références sont utilisées pour désigner les mêmes éléments. Dans la suite de cette description, les caractéristiques et fonctions bien connues de l'homme du métier ne sont pas décrites en détails.

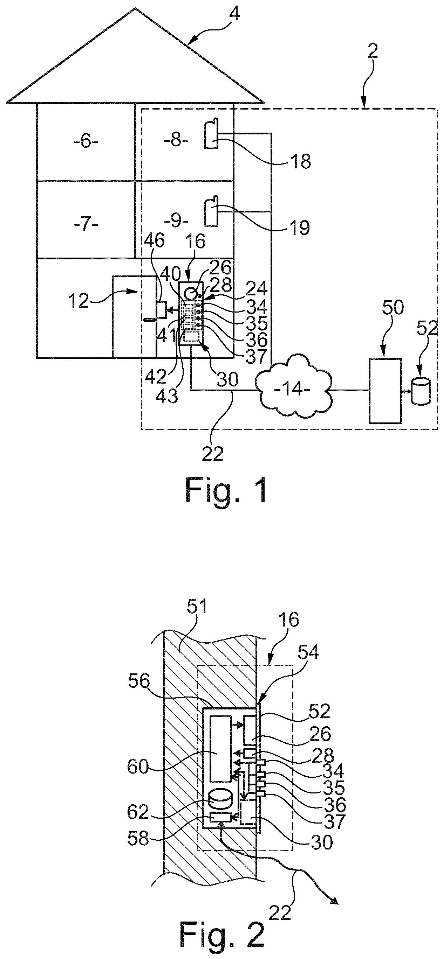

La figure 1 représente un système 2 de contrôle d'accès à une résidence 4. Typiquement, la résidence 4 est un habitat collectif comportant plusieurs appartements ou logements. Par exemple, la résidence 4 comporte au moins quatre appartements 6, 7, 8 et 9.

La résidence 4 est équipée d'une porte d'accès 12 à la résidence.

Le système 2 permet d'autoriser et, en alternance, d'interdire l'accès à la résidence 4 à un visiteur.

A cet effet, chaque résident de la résidence 4 est équipé d'un combiné audiophonique raccordé, par l'intermédiaire d'un réseau 14 de transmission d'informations à un interphone 16 situé à proximité de la porte 12. Typiquement, l'interphone 16 est situé à moins de 10 m et, le plus souvent, à moins de 5 m ou 3 m de la porte 12.

Pour simplifier l'illustration, seuls deux combinés audiophoniques 18, 19 ont été représentés. Ces combinés sont par exemples des téléphones mobiles raccordés au réseau 14 par l'intermédiaire d'une liaison sans fil.

Par exemple, le réseau 14 est un réseau téléphonique public. Il peut s'agir d'un réseau à commutation de paquets ou d'un réseau à commutation de circuits. Ici, il s'agit d'un réseau à commutation de paquets.

L'interphone 16 permet à un visiteur présent devant cet interphone d'établir une conversation audiophonique avec le résident appelé. A cet effet, l'interphone 16 est raccordé au réseau 14 par l'intermédiaire d'une liaison 22 de transmission d'informations. De préférence, cette liaison 22 est également une liaison de transmission d'informations sans fil.

L'interphone 16 est équipé :
- d'un porte-étiquettes 24,
- d'un haut-parleur 26, et
- d'un microphone 28.

L'interphone 16 peut également comprendre des équipements optionnels 30 tels que :
- un clavier permettant à un aveugle de composer un code d'appel d'un des combinés d'un résident,
- un écran, ou
- un lecteur de badge permettant d'autoriser et, en alternance, d'interdire l'accès à la résidence 4 en fonction d'informations contenues dans un badge présenté devant ce lecteur.

Le porte-étiquettes 24 comprend ici autant de boutons d'appel que de résidents. Ici, pour simplifier l'illustration, seuls quatre boutons d'appel 34 à 37 ont été représentés. Chaque bouton d'appel déclenche, lorsqu'il est activé, un appel vers le combiné d'un résident particulier. Par exemple, les boutons sont des boutons poussoirs qui sont activés lorsqu'un visiteur les enfonce.

Le porte-étiquettes 24 comprend également une étiquette associée à chaque bouton d'appel. Ainsi, le porte-étiquettes 24 comprend quatre étiquettes 40 à 43 associées, respectivement, aux boutons d'appel 34 à 37.

Les étiquettes 40 à 43 sont des étiquettes en papier. Sur chacune de ces étiquettes est inscrit un identifiant de l'appartement appelé lorsque le bouton d'appel associé à cette étiquette est enfoncé. Typiquement, l'identifiant est le nom du résident appelé. En pratique, il s'agit d'étiquettes réalisées en imprimant le nom du résident sur une feuille de papier puis en découpant cette feuille de papier. Le grammage de la feuille de papier est compris entre 40 g/m² et 160 g/m² et, de préférence, entre 60 g/m² et 140 g/m² de manière à pouvoir être imprimé à l'aide de la plupart des imprimantes de bureau conventionnelles.

Le système 2 comprend également un mécanisme 46 de verrouillage et, en alternance, de déverrouillage de la porte 12. Ce mécanisme 46 est commandé par l'interphone 16 en réponse à la réception d'une commande d'ouverture ou de fermeture de la porte 12 transmise par l'un des combinés 18 et 19. Ainsi, dans ce mode de réalisation, l'interphone 16 remplit en plus les fonctions d'un portier électrique.

Le système 2 comprend également un serveur 50 raccordé à l'interphone 16 par l'intermédiaire du réseau 14. Par exemple, ce serveur 50 permet de configurer et de commander certaines fonctionnalités de l'interphone 16. A cet effet, le serveur 50 est associé à une mémoire 52 dans laquelle sont enregistrés différents paramètres de configuration de l'interphone 16.

La figure 2 représente l'interphone 16 encastré dans un mur vertical 51 de la résidence 4. Seule la face avant 52 de cet interphone 16 est directement exposée et accessible depuis l'extérieur de la résidence 4. Cette face avant 52 s'étend dans un plan vertical. Ici, la face avant de l'interphone 16 et du porte-étiquettes 24 sont confondues. Par exemple, cette face avant 52 est constituée par la face avant d'une même platine antivandale 54. Cette platine 54 forme la façade avant de l'interphone 16 qui directement exposée à l'extérieur de la résidence. Une telle platine 54 est typiquement réalisée en métal de manière à résister aux différentes tentatives de vandalisme. Par exemple, cette platine est une plaque en inox de plus de 2 à 3 mm d'épaisseur ou une plaque en aluminium de plus de 3 à 4 mm d'épaisseur.

L'ensemble des composants électroniques qui constitue le haut-parleur 26, le microphone 28 et les équipements optionnels 30 sont situés derrière cette platine 54 à l'intérieur d'une niche 56 creusée dans l'épaisseur du mur 51.

L'interphone 16 comprend également, logé à l'intérieur de la niche 56 :
- un émetteur-récepteur 58 permettant de raccorder l'interphone 16 au réseau 14,
- une unité de commande 60 des différents équipements de l'interphone 16, et
- une mémoire 62 raccordée à l'unité 60 de commande.

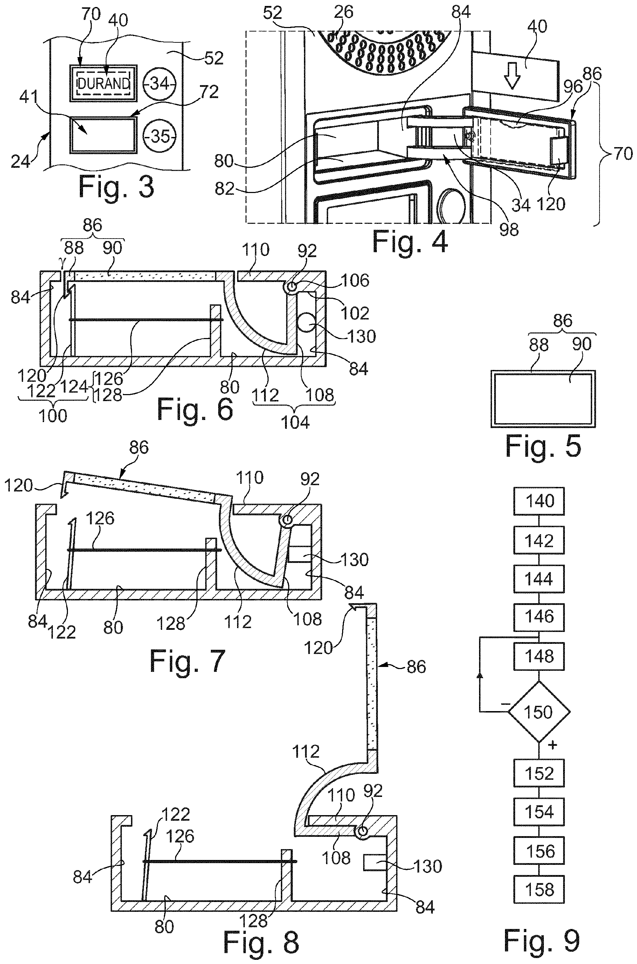

L'unité 60 est un circuit électronique. Typiquement, ce circuit électronique comporte un microprocesseur programmable aptes à exécuter des instructions enregistrées sur un support d'enregistrement d'informations. A cet effet, les instructions nécessaires à l'exécution du procédé de la figure 9 sont enregistrées dans la mémoire 62.

L'accès à l'intérieur de la niche 56 n'est possible qu'en ouvrant l'interphone 16. L'ouverture de l'interphone 16 consiste par exemple à déverrouiller, à l'aide d'un outillage spécial, la platine 54 pour que l'accès à l'intérieur de la niche 56 soit rendu possible. Un tel accès à l'intérieur de la niche 56 est uniquement prévu pour des opérations de maintenance de l'interphone 16 et non pas pour remplacer une étiquette.

La figure 3 représente plus en détail une partie de la face avant 52 du porte-étiquettes 24. Les étiquettes identifiant les différents résidents sont fixées sur cette face avant. A cet effet chaque étiquette est reçue dans un réceptacle respectif. Sur la figure 3 seuls deux réceptacles 70 et 72 ont été représentés. Les réceptacles 70 et 72 reçoivent, respectivement, les étiquettes 40 et 41. Les réceptacles du porte-étiquettes 24 sont ici tous identiques. Ainsi, seul le réceptacle 70 est décrit plus en détails par la suite.

La figure 4 représente le réceptacle 70. Ce réceptacle 70 comporte :
- un fond 80 parallèle à la face 52 et des parois latérales horizontales 82 et verticales 84, et
- un volet ajouré 86 mobile.

Le fond 80 et les parois 82 et 84 isolent mécaniquement l'intérieur du réceptacle 70 de l'intérieur de la niche 56 de manière à ce que l'accès à l'intérieur du réceptacle 70 ne permette pas un accès à l'intérieur de la niche 56 notamment à l'aide d'un outil tel qu'un tournevis. Ainsi, l'accès à l'intérieur du réceptacle 70 ne permet pas de dégrader les équipements électroniques situés derrière la platine 54 et à l'intérieur de la niche 56. A cet effet, le fond 80 et les parois 82 et 84 sont par exemple des plaques en polymère tel que du plastique ou en métal tel que de l'aluminium ou de l'acier de plus de 0,5 mm ou 1 mm d'épaisseur. Ces plaques sont dépourvues d'ouverture. Ces plaques et donc le réceptacle 70 sont fixés sans aucun degré de liberté à l'arrière de la platine 54.

Le volet 86 est déplaçable entre une position ouverte et une position fermée. Dans la position ouverte, le remplacement par un être humain, à la main et sans outil, de l'étiquette 40 par une nouvelle étiquette est possible. A l'inverse, dans la position fermée, le volet 86 empêche un tel remplacement de l'étiquette 40 tout en laissant visible depuis l'extérieur de la platine 54 le nom du résident inscrit sur cette étiquette 40. Sur la figure 4, le volet 86 est représenté dans sa position ouverte et sur la figure 3 dans sa position fermée. Dans la position fermée, la face avant du volet 86 affleure la face avant 52, c'est-à-dire que le volet 86 dépasse de la face avant 52 de moins de 0,5 mm et, de préférence, de moins de 0,1 mm.

Dans ce mode de réalisation, le volet 86 comporte un cadre rectangulaire 88 (figure 5) qui entoure et maintient sans aucun degré de liberté une paroi transparente 90. Les dimensions du cadre 88 et de la paroi transparente 90 sont telles que, dans la position fermée, le volet 86 recouvre entièrement l'étiquette 40. Plus précisément, dans la position fermée, c'est la paroi transparente 90 qui recouvre plus de 80 % ou 90 % de la surface de l'étiquette 40. Ainsi, dans cette position fermée, les inscriptions sur l'étiquette 40 restent visibles depuis l'extérieur de la platine 54 à travers la paroi transparente 90. Typiquement, la paroi transparente 90 est réalisée dans un matériau transparent à la lumière visible tel que du polycarbonate ou du verre trempé. Le cadre 88 est par exemple réalisé en métal tel qu'en aluminium ou en acier.

La face arrière du volet 86 comporte une fente 96 à l'intérieur de laquelle l'étiquette 40 peut être glissée et, en alternance, retirée. La fente 96 retient cette étiquette 40 plaquée derrière la paroi transparente 90 une fois que l'étiquette 40 est introduite à l'intérieur de la fente 96. Ainsi, le déplacement du volet 96 de sa position fermée vers sa position ouverte déplace également l'étiquette 40 d'une position dans laquelle elle est située à l'intérieur du réceptacle 70 vers une position où elle est située à l'extérieur de ce réceptacle 70.

Typiquement, la fente 96 comprend un onglet ou une entaille pour introduire l'ongle d'une main de manière à faciliter la préhension de l'étiquette 40 pour la retirer de cette fente.

Ici, le volet 86 pivote autour d'un axe vertical 92 (figures 6 à 8) pour se déplacer entre ses positions ouverte et fermée. A cet effet, le réceptacle 70 comprend une charnière 98 fixée sans aucun degré de liberté d'un côté à l'une des parois verticales 84 et de l'autre côté au volet 86.

Les figures 6 à 8 représentent plus en détail la charnière 98 ainsi qu'un mode de réalisation d'un verrou électrique 100 commandable.

La charnière 98 comporte :
- une partie fixe 102 fixée sans aucun degré de liberté directement sur l'une des parois verticales 84 du réceptacle 70,
- une partie mobile 104 sur laquelle est fixée sans aucun degré de liberté le volet 86,
   et
- un gond 106 qui relie mécaniquement les parties fixe et mobile de la charnière 98 entre elles pour former une liaison pivot dont l'axe de rotation est confondu avec l'axe de rotation 92.

Dans ce mode de réalisation, la partie mobile 104 comporte une butée rectiligne 108 qui, dans la position fermée, s'étend perpendiculairement à la face 52 vers l'intérieur du réceptacle 70. Une extrémité proximale de cette butée 108 est en contact mécanique avec le gond 106. Dans la position ouverte, cette butée 108 vient directement en appui sur une contre-butée 110 pour limiter l'amplitude du débattement du volet 86 entre ses positions ouverte et fermée. Ici, dans la position ouverte, lorsque la butée 108 est en appui sur la contre-butée 110 (figure 8), le volet 86 s'étend dans un plan vertical perpendiculaire à la face avant 52 de la platine 54. Cette position complètement ouverte est représentée sur la figure 8.

L'extrémité distale de la butée 108 est mécaniquement raccordée sans aucun degré de liberté à un bord vertical du volet 86 par un bras 112 de liaison. Ici, la projection orthogonale dans un plan horizontal du bras 112 décrit un arc de cercle de 90° à plus ou moins 10° près.

Le verrou 100 est déplaçable d'une position verrouillée vers une position déverrouillée en réponse à une commande de déverrouillage. Dans la position verrouillée, représentée sur la figure 6, le verrou 100 verrouille le volet 86 dans sa position fermée de sorte qu'il n'est pas possible de le déplacer à la main et sans outil vers sa position ouverte. A l'inverse, dans sa position déverrouillée, le verrou 100 déverrouille le volet 86 de sorte qu'il est possible de le déplacer directement à la main et sans l'aide d'outil de sa position fermée vers sa position ouverte. Les figures 7 et 8 représentent le verrou 100 dans sa position déverrouillée.

Le verrou 100 comporte :
- une pièce 120 de retenue fixée sans aucun degré de liberté sur la face arrière du cadre 88, et
- un crochet 122 déformable entre une position active, représentée sur la figure 6, et une position rétractée représentée sur la figure 7.

Dans la position active, le crochet 122 coopère mécaniquement avec la pièce 120 pour obtenir la position verrouillée du verrou 100. Dans la position rétractée, le crochet 122 est mécaniquement éloigné de la pièce 120 pour obtenir la position déverrouillée du verrou 100.

Par exemple, la pièce 120 présente un méplat parallèle à la face arrière du cadre 88 et tournée vers cette face arrière. La face arrière du cadre 88 est celle qui est tournée vers l'intérieur du réceptacle 70 dans la position fermée du volet 86. Dans sa position active, l'extrémité distale du crochet 122 est directement en appui sur ce méplat, empêchant ainsi l'ouverture du volet 86.

L'extrémité proximale du crochet 122 est directement fixée sans aucun degré de liberté sur le fond 82 du réceptacle 70.

Dans ce mode de réalisation, le crochet 122 se déplace par déformation élastique entre ses positions active et rétractée. Pour cela, ici, il est déformé en flexion. En absence de toute sollicitation mécanique extérieure, le crochet 122 revient et reste dans sa position active.

Le verrou 100 comporte également un actionneur électrique 124 commandable. L'actionneur 124 est apte à déplacer, en réponse à la commande de déverrouillage, le crochet 122 de sa position active vers sa position rétractée et donc le verrou 100 de sa position verrouillée vers sa position déverrouillée. Ici, cet actionneur 124 comporte :
- un fil 126 en matériau à mémoire de forme, et
- un pieu 128 ancré sans aucun degré de liberté sur le fond 80 du réceptacle 70.

Une portion du fil 126 est attachée sans aucun degré de liberté au crochet 122 tandis qu'une autre portion opposée est attachée sans aucun degré de liberté au pieu 128. Globalement, le fil 126 s'étend horizontalement parallèlement à la face 52. Le fil 126 se rétracte quand il est parcouru par un courant électrique, ce qui déplace le crochet 122 de sa position active vers sa position rétractée. Ainsi, la génération de la commande de déverrouillage du verrou 100 consiste à faire circuler un courant électrique dans le fil 126. Par exemple, le fil 126 est le fil commercialisé sous la marque Flexinol® par la société Dynalloy Inc.

Enfin, le réceptacle 70 comporte aussi un organe élastique 130 qui sollicite en permanence le volet 86 vers sa position ouverte lorsque celui-ci est dans sa position fermée. A cet effet, dans ce mode de réalisation, l'organe 130 est directement en appui mécaniquement d'un côté sur la paroi verticale 84 et, du côté opposé, sur la butée 108 de manière à solliciter la butée 108 en direction de la contre-butée 110.

Par exemple, l'organe 130 est un bloc de matériau élastomère tel qu'un bloc de caoutchouc ou un ressort comme un ressort hélicoïdal en métal.

Dès lors, dès que le verrou 100 passe de sa position verrouillée vers sa position déverrouillée, l'organe 130 pousse le volet 86 vers sa position ouverte. Ainsi, le volet 86 pivote automatiquement en dehors du plan de la face avant 52 dès que le verrou 100 a atteint sa position déverrouillée. Ensuite, un résident peut facilement attraper le volet 86 pour le déplacer vers sa position complètement ouverte représentée sur la figure 8.

En absence de commande de déverrouillage, le fil 126 se détend et le crochet 122 revient, par déformation élastique, vers sa position active. Dès que le crochet 122 est dans sa position active, il suffit que l'utilisateur pousse manuellement le volet 86 jusqu'à sa position fermée pour que la pièce 120 s'engage à nouveau dans le crochet 122 et verrouille le volet 86 dans sa position fermée.

Le fonctionnement du système 2 va être décrit en référence au procédé de la figure 9. Le fonctionnement du système 2 est décrit par la suite dans le cas particulier du remplacement de l'étiquette 40 par une nouvelle étiquette. Toutefois, tout ce qui est décrit dans ce cas particulier se transpose sans difficulté au remplacement d'une autre étiquette de l'interphone 16.

Lors d'une étape 140, le résident qui souhaite remplacer l'étiquette 40 contacte le serveur 50 par l'intermédiaire de son téléphone mobile ou d'un ordinateur. Ensuite, il s'identifie auprès du serveur 50. Lors de l'identification du résident, de préférence, le résident est également authentifié par une méthode d'authentification conventionnelle. Par la suite, le terme « identifier » est donc utilisé pour désigner soit une identification seule soit à la fois une identification et une authentification. Si le résident est correctement identifié, un identifiant de l'interphone 16 et du réceptacle qui contient l'étiquette 40 sont sélectionnés, notamment, à partir de l'identifiant du résident.

Ensuite, lors d'une étape 142, le serveur 50 sélectionne à partir des informations transmises par le résident un mode opératoire pour déclencher l'ouverture du réceptacle 70. Lors de cette étape, les informations nécessaires au déclenchement de l'ouverture du réceptacle 70 sont transmises au résident qui doit remplacer l'étiquette 40.

Le mode opératoire peut être sélectionné parmi de nombreux modes opératoires possibles. Des exemples de modes opératoires possibles sont listés ci-dessous.

L'unité 60 transmet la commande de déverrouillage au verrou 100 :
1) Dès qu'un badge comprenant un identifiant du résident souhaitant remplacer l'étiquette 40 est lu par un lecteur de badge dont l'interphone est équipé.
2) Si l'interphone 16 est équipé d'un clavier, dès qu'un code particulier identifiant le résident autorisé à ouvrir le réceptacle 70 est saisi sur ce clavier.
3) Dès qu'un code particulier identifiant le résidant autorisé à ouvrir le réceptacle 70 est composé en utilisant le ou les boutons d'appel du porte-étiquette.
4) Dès qu'un code vocal identifiant le résident autorisé à ouvrir le réceptacle 70 est prononcé dans la microphone 28.
5) Dès qu'une liaison de transmission d'informations courte distance, c'est-à-dire inférieure à 10 m, est établie directement entre le téléphone mobile du résident autorisé à ouvrir le réceptacle 70 et l'interphone 16. Par exemple, l'unité 60 identifie le résident à partir d'un identifiant téléchargé dans le téléphone portable. La liaison courte distance est par exemple une liaison Wi-Fi ou Bluetooth ou NFC (Near Field Communication).
6) Dès qu'un code DTMF (Dual Tone Multi Frequency) particulier identifiant le résident autorisé à ouvrir le réceptacle 70 est joué par le téléphone mobile de ce résident dans le microphone 28. Dans ce cas, le code DTMF est par exemple contenu dans un fichier audio transmis par le serveur 50 au téléphone mobile du résident.
7) Dès que le résident appelle un serveur vocal qui, en réponse, commande l'unité 60 pour qu'elle génère la commande de déverrouillage du réceptacle 70. Typiquement, à cette occasion, le résident doit s'identifier et s'authentifier auprès du serveur vocal. Par exemple, ici, le serveur 50 est aussi programmé pour remplir cette fonction de serveur vocal.
8) Dès que le serveur 50 reçoit une instruction d'ouverture du réceptacle 70 transmise depuis le téléphone mobile du résident. Dans ce cas, en réponse à la réception de cette instruction, le serveur 50 se connecte immédiatement à l'interphone 16 et commande l'unité 60 pour qu'elle génère la commande de déverrouillage.

De nombreux autres modes opératoires possibles sont envisageables. Ces modes opératoires ont ici en commun de requérir une identification et, de préférence, une authentification correctes au préalable du résident autorisé à ouvrir le réceptacle 70. Ainsi, seul un résident autorisé à remplacer l'étiquette 40 peut déclencher l'ouverture du volet 86.

Lors d'une étape 144, le serveur 50 établit une liaison avec l'interphone 16 par l'intermédiaire du réseau 14. Ensuite, il programme dans l'interphone 16 et plus précisément dans l'unité 60 le mode opératoire sélectionné pour déclencher l'ouverture du réceptacle 70. Lors de cette étape 144, si nécessaire, le serveur 50 transmet également à l'unité 60 les informations permettant d'identifier la personne autorisée à remplacer l'étiquette 40.

Ensuite, lors d'une étape 146, la nouvelle étiquette est imprimée soit par le résident lui-même. Elle peut aussi être imprimée par le serveur 50 puis transmise par courrier postal au résident.

Lors d'une étape 148, le résident se présente devant l'interphone 16 muni de la nouvelle étiquette. Il met alors en oeuvre le mode opératoire sélectionné lors de l'étape 142. En particulier, il transmet, par l'intermédiaire d'une interface homme-machine, à l'interphone 16 ou au serveur 50 les informations nécessaires pour l'identifier. L'interface homme-machine utilisée dépend du mode opératoire sélectionné lors de l'étape 142. Par exemple, l'interface homme-machine utilisée est choisie dans le groupe composé du microphone 28, d'un clavier de l'interphone 16, d'un lecteur de badge de l'interphone 16, des boutons 34-37, d'une interface homme-machine d'un téléphone mobile du résident. Lors de cette étape, le résident déclenche également l'envoi à l'interphone 16 ou au serveur 50 d'une demande de déverrouillage du verrou 100.

Ensuite, lors d'une étape 150, selon le mode opératoire sélectionné, l'unité 60 de l'interphone 16 ou le serveur 50 vérifie si l'identifiant acquis correspond à un identifiant préenregistré d'une personne autorisée à remplacer l'étiquette 40. Dans la négative, la génération de la commande de déverrouillage du verrou 100 est inhibée et le volet 86 reste donc dans sa position fermée. Par exemple, si la demande de déverrouillage a été transmise au serveur 50 lors de l'étape 148, alors ce serveur inhibe la génération de la commande de déverrouillage en ne retransmettant pas cette demande de déverrouillage à l'interphone 16. Si la commande de déverrouillage a directement été transmise à l'interphone 16 lors de l'étape 148, alors l'unité 60 acquière cette demande mais ne déclenche pas la génération de la commande de déverrouillage. Ainsi, le remplacement de l'étiquette 40 est rendu impossible. Dans ce cas, le procédé retourne à l'étape 148.

Dans le cas où le résident est correctement identifié, lors d'une étape 152, l'unité 60 génère la commande de déverrouillage et la transmet au verrou 100. Par exemple, si la demande de déverrouillage a été reçue par le serveur 50 lors de l'étape 148, le serveur 50 la retransmet à l'unité 60 qui l'acquière. Si la demande de déverrouillage a directement été transmise à l'unité 60, celle-ci l'acquière. Puis, lors de l'étape 152, en réponse à cette demande de déverrouillage acquise, l'unité 60 génère la commande de déverrouillage.

En réponse, lors d'une étape 154, le fil 126 se rétracte et le crochet 122 se déplace vers sa position rétractée. Le verrou 100 est alors dans sa position déverrouillée. L'organe 130 pousse alors le volet 86 en dehors du plan de la face 52.

Lors d'une étape 156, le résident saisit à la main le volet 86 et le fait pivoter jusqu'à atteindre sa position complètement ouverte. Il enlève alors l'étiquette 40 et la remplace par la nouvelle étiquette. Ensuite, il referme le volet 86 en le poussant manuellement de sa position ouverte vers sa position fermée.

Lors d'une étape 158, lorsque le volet 86 atteint sa position fermée, le verrou 100 bascule automatiquement à nouveau dans sa position verrouillée. Le remplacement de l'étiquette 40 par une nouvelle étiquette est alors terminé.

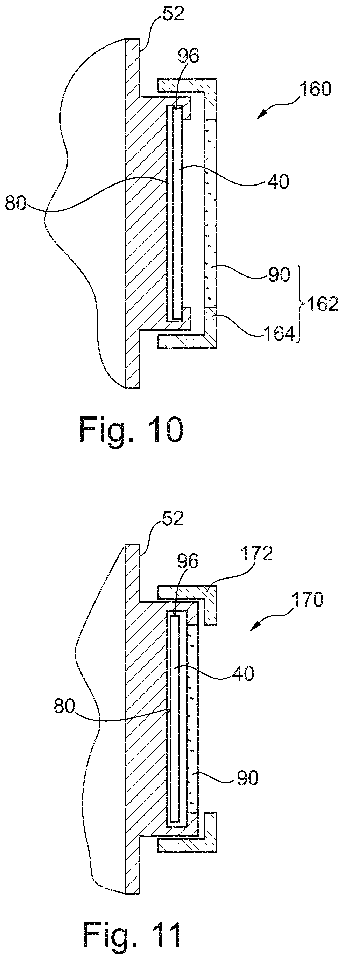

La figure 10 représente un réceptacle 160 susceptible d'être utilisé à la place du réceptacle 70 dans l'interphone 16. Le réceptacle 160 est identique au réceptacle 70 sauf que :
- les parois latérales 82 et 84 sont omises et le fond 80 du réceptacle est en saillie vers l'extérieur au-delà de la face avant 52,
- la fente 96 est fixée sans aucun degré de liberté sur le fond 80 et n'est plus solidaire du volet 86, et
- le volet 86 est remplacé par un volet 162.

Le volet 162 est identique au volet 86 sauf que le cadre 88 est remplacé par un cadre 164 et que la fente 96 n'est plus fixée sur la face arrière de ce cadre 164. Le cadre 164 est conformé pour obturer l'ouverture de la fente 96 lorsque le volet 162 est dans sa position fermée et, au contraire, laisser un libre accès à l'ouverture de la fente 96 lorsqu'il est dans sa position ouverte. Par exemple, à cet effet, le cadre 164 a une section transversale en forme d'équerre dont l'une des pattes s'étend perpendiculairement à la face avant 52 et entoure complètement la fente 96 dans la position fermée du volet 162. Ainsi, dans cette position fermée, le résident ne peut pas accéder à l'ouverture de la fente 96, il ne peut donc pas remplacer l'étiquette 40.

La figure 11 représente un réceptacle 170 susceptible d'être utilisé à la place du réceptacle 160 dans l'interphone 16. Le réceptacle 170 est identique au réceptacle 160 sauf que :
- la paroi transparente 90 est fixée sans aucun degré de liberté et en permanence devant la fente 96 qui est elle-même fixée sans aucun degré de liberté sur le fond 80 du réceptacle, et
- le volet 162 est remplacé par un volet 172.

Le volet 172 est identique au volet 162 sauf qu'il est dépourvu de la paroi transparente 90. Le fonctionnement du réceptacle 170 se déduit sans difficulté du fonctionnement du réceptacle 160.

De nombreux autres modes de réalisation sont possibles. En variante, l'interphone peut communiquer avec le téléphone mobile du résident par l'intermédiaire d'une liaison courte distance telle qu'une liaison Bluetooth, Wi-Fi ou NFC (« Near Field Communication ») ou autres. Dans ce cas, le serveur 50 transmet au préalable la demande de déverrouillage au téléphone mobile du résident. Puis, lorsque le téléphone mobile est relié à l'interphone 16 par la liaison courte distance, il transmet directement la demande de déverrouillage préalablement enregistrée.

Dans un autre mode de réalisation, le volet est déplacé, entre ses positions ouverte et fermée, en translation parallèlement à la face avant 52 de l'interphone 16.

Les boutons d'appel peuvent être communs à l'ensemble des étiquettes. Dès lors, il est possible d'avoir un nombre de boutons d'appel plus petit ou, au contraire, plus grand que le nombre d'étiquettes. Par exemple, l'interphone comporte un ou deux boutons pour sélectionner sur un écran un numéro d'un appartement et un bouton pour déclencher l'appel vers le résident de l'appartement ainsi sélectionné. Dans ce cas, typiquement, chaque étiquette en papier comporte une inscription qui associe l'identifiant de l'appartement au numéro qu'il faut sélectionner sur l'écran pour appeler le résident de cet appartement.

Dans un autre mode de réalisation, les boutons peuvent aussi former un clavier numérique qui permet de composer le numéro du résident à appeler. Dans ce cas, chaque étiquette comporte une inscription qui associe l'identifiant d'un appartement au numéro à composer sur ce clavier.

Les emplacements du crochet 122 et de la pièce 120 peuvent être inversés. Ainsi, dans une variante, le crochet est solidaire du volet tandis que la pièce 120 est solidaire du fond 80 du réceptacle. Dans ce cas, le fil 126 est utilisé soit pour déplacer la pièce 120, soit le crochet 122, de manière à faire passer le verrou de sa position verrouillée vers sa position déverrouillée.

Un autre identifiant que le nom du résident peut être inscrit sur l'étiquette pour identifier l'appartement à appeler. Par exemple, il peut s'agir du numéro de l'appartement ou de toute autre information apte à permettre l'identification de l'appartement appelé par un visiteur.

En variante, le porte-étiquettes comprend un seul bouton d'appel associé à une seule étiquette.

Les boutons d'appel ne sont pas nécessairement des boutons enfonçables. Par exemple, il peut s'agir d'un capteur qui détectent la proximité d'un doigt.

L'interphone peut comporter des éléments supplémentaires tels qu'une caméra et un écran de manière à permettre l'établissement d'une vidéo conférence avec le résident appelé.

Le système de contrôle d'accès ne comporte pas nécessairement de serveur tel que le serveur 50. Dans ce cas les fonctionnalités du serveur 50 sont directement intégrées dans l'interphone 16.

De même, le système de contrôle d'accès peut utiliser d'autres réseaux qu'un réseau public. Par exemple, les combinés audiophoniques peuvent être raccordés à l'interphone électrique à l'aide d'un réseau local de la résidence.

La face avant du porte-étiquettes 24 peut être, comme ici, confondue et formée d'un seul bloc avec la face avant de l'interphone. Toutefois, la face avant du porte-étiquettes 24 peut également être réalisée dans un bloc de matière différent qui est ensuite ajusté dans un logement prévu à cet effet dans la face avant de l'interphone. Dans ce dernier cas, le porte-étiquettes peut être fabriqué indépendamment de l'interphone.

D'autres méthodes pour faire passer l'interphone 16 dans le mode de remplacement d'une étiquette sont possibles. Par exemple, le serveur 50 programme l'interphone 16 pour que si le bouton d'appel associé à l'étiquette à remplacer est enfoncé, alors l'interphone 16 appelle le combiné audiophonique correspondant et passe automatiquement en mode de remplacement. Ensuite, le portier attend qu'un code de déverrouillage de l'étiquette soit communiqué à partir du combiné audiophonique appelé. A titre d'illustration, pour communiquer le code à l'interphone, le résident appelé tape sur le clavier de son téléphone un code reçu en même temps que la nouvelle étiquette. Ce code est transmis à l'interphone 16, par exemple, sous forme de tonalités DTMF (Dual Tone Multifrequency). L'interphone 16 déverrouille l'étiquette à remplacer si le code reçu correspond au code attendu.

## Revendications

1. Interphone pour une résidence comportant :
- une platine (54) destinée à être exposée à l'extérieur de la résidence, cette platine protégeant l'accès à l'intérieur de l'interphone,
- un haut-parleur (26) et un microphone (28) logés dans cette platine,
- un porte-étiquette (24) logé dans cette platine et comprenant :
• au moins un bouton (34-37) d'appel permettant de sélectionner un appartement situé à l'intérieur de la résidence et de déclencher l'établissement d'une communication vocale entre un visiteur situé devant l'interphone et un résident situé à l'intérieur de l'appartement par l'intermédiaire du haut-parleur et du microphone de l'interphone,
• pour chaque appartement, un réceptacle (70, 72; 160 ; 170) apte à recevoir de façon amovible une étiquette (40-43) sur laquelle est inscrite un identifiant d'un appartement de la résidence, chaque réceptacle comportant :
- un fond (80) qui isole mécaniquement ce réceptacle de l'intérieur de l'interphone, et
- un verrou électrique (100) commandable déplaçable de façon réversible entre une position verrouillée dans laquelle il verrouille l'étiquette (40-43) à l'intérieur du réceptacle et une position déverrouillée dans laquelle il autorise le remplacement, à la main et sans outil spécifique, de l'étiquette,
- un circuit électronique (60) apte à acquérir une demande de déverrouillage du verrou électrique et, en réponse, à commander le verrou électrique pour le déplacer de sa position verrouillée vers sa position déverrouillée,
**caractérisé en ce que** :
- chaque réceptacle (70-71 ; 160 ; 170) est apte à recevoir de façon amovible une étiquette en papier et pour cela comporte :
• une paroi transparente (90) apte à recouvrir la surface de l'étiquette (40-43) en papier lorsqu'elle est reçue à l'intérieur du réceptacle,
• un volet ajouré (86 ; 164 ; 172) déplaçable par rapport à la platine entre :
- une position ouverte dans laquelle le volet autorise le remplacement de l'étiquette reçue dans ce réceptacle par une nouvelle étiquette, et
- une position fermée dans laquelle il empêche le remplacement de l'étiquette par une nouvelle étiquette tout en laissant l'identifiant de l'appartement inscrit sur cette étiquette lisible depuis l'extérieur de l'interphone à travers la paroi transparente (90),
• dans sa position verrouillée, le verrou électrique (100) est apte à verrouiller le volet ajouré (86 ; 164 ; 172) dans sa position fermée et dans sa position déverrouillée, il est apte à autoriser le déplacement, à la main et sans outil spécifique, du volet ajouré vers sa position ouverte.

2. Interphone selon la revendication 1, dans lequel cet interphone comporte plusieurs réceptacles (70, 72; 160 ; 170) et le volet ajouré (86 ; 164 ; 172) de chaque réceptacle est déplaçable entre ses positions ouverte et fermée indépendamment des volets des autres réceptacles.

3. Interphone selon l'une quelconque des revendications précédentes, dans lequel chaque réceptacle (70, 72) comprend :
- la paroi transparente (90) fixée sans aucun degré de liberté sur le volet de ce réceptacle,
- une charnière (98) dont l'axe de rotation est parallèle à un plan dans lequel s'étend essentiellement la platine, cette charnière reliant mécaniquement le volet au fond du réceptacle de manière à ce que le volet se déplace entre ses positions ouverte et fermée par rotation autour de cet axe de rotation, et
- une fente (96) fixée sans aucun degré de liberté sur une face arrière du volet (86) tournée vers le fond du réceptacle lorsque ce volet est dans sa position fermée, cette fente étant apte à recevoir à coulissement l'étiquette en papier et à maintenir l'étiquette en papier reçue derrière la paroi transparente pendant le déplacement de ce volet de sa position ouverte vers sa position fermée.

4. Interphone selon l'une quelconque des revendications précédentes, dans lequel le verrou (100) comporte :
- une pièce (120) de retenue solidaire de l'un du volet et du fond du réceptacle, et
- un crochet (122) solidaire de l'autre du volet et du fond du réceptacle, ce crochet étant déplaçable par déformation élastique entre :
• une position active dans laquelle il est en appui mécanique sur la pièce (120) de retenue pour verrouiller le volet dans sa position fermée et ainsi obtenir la position verrouillée du verrou, et
• une position rétractée dans laquelle il est mécaniquement séparé de la pièce de retenue pour libérer le volet et ainsi obtenir la position déverrouillée du verrou, et
- un fil (126) en matériau à mémoire de forme relié mécaniquement d'un côté au crochet (122) et de l'autre côté au fond (80) du réceptacle de manière à déplacer le crochet de sa position active vers sa position rétractée lorsqu'il est traversé par un courant électrique.

5. Interphone selon l'une quelconque des revendications précédentes, dans lequel l'interphone comporte :
- une interface homme-machine (28, 30, 34-37) ou un émetteur-récepteur (58) apte à acquérir un identifiant d'une personne présente devant l'interphone, et
- un circuit électronique (60) programmé pour déclencher la génération de la commande de déverrouillage du verrou d'un réceptacle de l'interphone uniquement si l'identifiant acquis correspond à un identifiant préenregistré d'une personne autorisée à remplacer une étiquette en papier et, dans le cas contraire, pour inhiber la génération de cette commande de déverrouillage.

6. Interphone selon l'une quelconque des revendications précédentes, dans lequel l'interphone comprend l'étiquette en papier reçue à l'intérieur du réceptacle.

7. Interphone selon l'une quelconque des revendications précédentes, dans lequel la paroi transparente (90) est apte à recouvrir plus de 80 % de la surface de l'étiquette (40-43) en papier lorsqu'elle est reçue à l'intérieur du réceptacle.

8. Système de contrôle d'accès à une résidence, ce système de contrôle d'accès comportant :
- un interphone (16),
- une interface homme-machine apte à acquérir un identifiant d'une personne présente devant l'interphone, et
- un serveur distant (50) raccordé à l'interphone et à l'interface homme-machine par un réseau (14) grande distance de transmission d'informations, ce serveur distant (50) étant programmé pour déclencher la génération de la commande de déverrouillage du verrou d'un réceptacle de l'interphone uniquement si l'identifiant acquis correspond à un identifiant préenregistré d'une personne autorisée à remplacer une étiquette en papier et, dans le cas contraire, pour inhiber la génération de cette commande de déverrouillage
**caractérisé en ce que** l'interphone est conforme à l'une quelconque des revendications précédentes.

9. Système selon la revendication 8, dans lequel le système comporte un téléphone mobile équipé de l'interface homme machine.

## Patentansprüche

1. Gegensprechanlage für ein Wohnhaus, umfassend:
- eine Grundplatte (54), die dazu bestimmt ist, außerhalb des Wohnhauses aufgestellt zu werden, wobei diese Grundplatte den Zugang zum Inneren der Gegensprechanlage schützt,
- einen Lautsprecher (26) und ein Mikrofon (28), die in dieser Grundplatte untergebracht sind,
- einen Etikettenhalter (24), der in dieser Grundplatte untergebracht ist und Folgendes umfasst:
• mindestens eine Ruftaste (34 - 37) zum Auswählen einer Wohnung innerhalb des Wohnhauses und zum Auslösen der Sprachkommunikation zwischen einem Besucher, der sich vor der Gegensprechanlage befindet, und einem Bewohner innerhalb der Wohnung über den Lautsprecher und das Mikrofon der Gegensprechanlage,
• für jede Wohnung eine Aufnahme (70, 72; 160; 170), die geeignet ist, auf entfernbare Weise ein Etikett (40 - 43) aufzunehmen, auf dem eine Kennung einer Wohnung des Wohnhauses geschrieben ist, wobei jede Aufnahme Folgendes umfasst:
- einen Boden (80), der diese Aufnahme mechanisch vom Innenbereich der Gegensprechanlage isoliert, und
- eine elektrische Verriegelung (100), die steuerbar reversibel zwischen einer verriegelten Position, in der sie das Etikett (40 - 43) im Inneren der Aufnahme verriegelt, und einer entriegelten Position, in der sie den manuellen Austausch des Etiketts ohne Spezialwerkzeug ermöglicht, beweglich ist,
- eine elektronische Schaltung (60), die geeignet ist, eine Forderung zur Freigabe der elektrischen Verriegelung zu erfassen und als Reaktion darauf die elektrische Verriegelung zu steuern, um sie von ihrer verriegelten Position in ihre entriegelte Position zu bewegen,
**dadurch gekennzeichnet**, doss:
- jede Aufnahme (70 - 71; 160; 170) geeignet ist, ein Papieretikett entfernbar aufzunehmen, und zu diesem Zweck enthält:
• eine transparente Wand (90), die geeignet ist, die Oberfläche des Papieretiketts (40 - 43) abzudecken, wenn es im Inneren der Aufnahme aufgenommen ist,
• eine durchbrochene Klappe (86; 164; 172), die in Bezug auf die Grundplatte beweglich ist zwischen:
- einer offenen Position, in der die Klappe es ermöglicht, das in dieser Aufnahme aufgenommene Etikett durch ein neues Etikett zu ersetzen, und
- einer geschlossenen Position, in der sie verhindert, dass das Etikett durch ein neues Etikett ersetzt wird, während die Wohnungskennzeichnung auf dem Etikett von der Außenseite der Gegensprechanlage durch die transparente Wand (90) lesbar bleibt,
• wobei die elektrische Verriegelung (100) in ihrer verriegelten Position geeignet ist, die durchbrochene Klappe (86; 164; 172) in ihrer geschlossenen Position zu verriegeln, und in ihrer entriegelten Position geeignet ist, die durchbrochene Klappe manuell und ohne Spezialwerkzeug in ihre geöffnete Position zu bewegen.

2. Gegensprechanlage gemäß Anspruch 1, wobei die Gegensprechanlage eine Vielzahl von Aufnahmen (70, 72; 160; 170) umfasst und die durchbrochene Klappe (86; 164; 172) jeder Aufnahme unabhängig von den Klappen der anderen Aufnahmen zwischen ihrer offenen und geschlossenen Position beweglich ist.

3. Gegensprechanlage gemäß einem der vorangehenden Ansprüche, wobei jede Aufnahme (70, 72) umfasst:
- die transparente Wand (90), die ohne jeglichen Freiheitsgrad an der Klappe dieser Aufnahme befestigt ist,
- ein Scharnier (98), dessen Drehachse parallel zu einer Ebene verläuft, in der sich die Grundplatte im Wesentlichen erstreckt, wobei das Scharnier die Klappe mechanisch mit dem Boden der Aufnahme verbindet, sodass sich die Klappe durch Drehen um die Drehachse zwischen ihrer offenen und geschlossenen Position bewegt, und
- einen Schlitz (96), der ohne jeglichen Freiheitsgrad auf einer Rückseite der Klappe (86) befestigt ist und zum Boden der Aufnahme zeigt, wenn sich die Klappe in ihrer geschlossenen Position befindet, wobei der Schlitz geeignet ist, das Papieretikett verschiebbar aufzunehmen und das aufgenommene Papieretikett hinter der transparenten Wand zu halten, während die Klappe von ihrer offenen Position in ihre geschlossene Position bewegt wird.

4. Gegensprechanlage gemäß einem der vorangehenden Ansprüche, wobei die Verriegelung (100) umfasst:
- ein Haltestück (120), das an einer der Klappen und am Boden der Aufnahme befestigt ist, und
- einen Haken (122), der an der anderen Klappe und am Boden der Aufnahme befestigt ist, wobei der Haken durch elastische Verformung beweglich ist zwischen:
• einer aktiven Position, in der er mechanisch auf dem Haltestück (120) abgestützt ist, um die Klappe in ihrer geschlossenen Position zu verriegeln und dadurch die verriegelte Position der Verriegelung zu erhalten, und
• einer eingefahrenen Position, in der er mechanisch von dem Haltestück getrennt ist, um die Klappe zu lösen und die entriegelte Position der Verriegelung zu erhalten, und
- einen Draht (126) aus Formgedächtnismaterial, der auf einer Seite mit dem Haken (122) und auf der anderen Seite mit dem Boden (80) der Aufnahme mechanisch verbunden ist, um den Haken von seiner aktiven Position in seine eingefahrene Position zu bewegen, wenn er von einem elektrischen Strom durchlaufen wird.

5. Gegensprechanlage gemäß einem der vorangehenden Ansprüche, wobei die Gegensprechanlage umfasst:
- eine Mensch-Maschine-Schnittstelle (28, 30, 34 - 37) oder einen Transceiver (58), die bzw. der geeignet ist, eine Kennung einer vor der Gegensprechanlage befindlichen Person zu erfassen, und
- eine elektronische Schaltung (60), die so programmiert ist, dass sie die Generierung des Entriegelungsbefehls der Verriegelung einer Aufnahme der Gegensprechanlage nur dann auslöst, wenn die erfasste Kennung einer zuvor aufgezeichneten Kennung einer Person entspricht, die berechtigt ist, ein Papieretikett zu ersetzen, und andernfalls die Generierung dieses Entriegelungsbefehls verhindert.

6. Gegensprechanlage gemäß einem der vorangehenden Ansprüche, wobei die Gegensprechanlage das im Inneren der Aufnahme aufgenommene Papieretikett umfasst.

7. Gegensprechanlage gemäß einem der vorangehenden Ansprüche, wobei die transparente Wand (90) geeignet ist, mehr als 80% der Oberfläche des Papieretiketts (40 - 43) abzudecken, wenn es im Inneren der Aufnahme aufgenommen ist.

8. Zutrittskontrollsystem für ein Wohnhaus, wobei dieses Zutrittskontrollsystem umfasst:
- eine Gegensprechanlage (16),
- eine Mensch-Maschine-Schnittstelle, die geeignet ist, eine Kennung einer vor der Gegensprechanlage befindlichen Person zu erfassen, und
- einen Fernserver (50), der mit der Gegensprechanlage und der Mensch-Maschine-Schnittstelle durch ein Fernnetz (14) zur Übertragung von Informationen verbunden ist, wobei der Fernserver (50) so programmiert ist, dass er die Generierung des Entriegelungsbefehls der Verriegelung einer Aufnahme der Gegensprechanlage nur dann auslöst, wenn die erfasste Kennung einer zuvor aufgezeichneten Kennung einer Person entspricht, die berechtigt ist, ein Papieretikett zu ersetzen, und andernfalls die Generierung dieses Entriegelungsbefehls verhindert, **dadurch gekennzeichnet, dass** die Gegensprechanlage einem der vorangehenden Ansprüche entspricht.

9. System gemäß Anspruch 8, wobei das System ein Mobiltelefon umfasst, das mit der Mensch-Maschine-Schnittstelle ausgestattet ist.

## Claims

1. Intercom for a dwelling, including:
- a panel (54) intended to be exposed to the outside of the dwelling, this panel protecting access to the inside of the intercom,
- a loudspeaker (26) and a microphone (28) that are housed in this panel,
- a label holder (24) housed in this panel and comprising:
• at least one call button (34-37) that makes it possible to select a flat situated inside the dwelling and to trigger the establishment of voice communication between a visitor situated at the intercom and a resident situated inside the flat by way of the loudspeaker and of the microphone of the intercom,
• for each flat, a receptacle (70, 72; 160; 170) able to removably receive a label (40-43) on which is written an identifier of a flat of the dwelling, each receptacle including:
- a base (80) that mechanically isolates this receptacle from the inside of the intercom, and
- a controllable electric lock (100) able to move reversibly between a locked position in which it locks the label (40-43) inside the receptacle and an unlocked position in which it allows the label to be replaced by hand and without a specific tool,
- an electronic circuit (60) able to acquire a request to unlock the electric lock and, in response, to control the electric lock so as to move it from its locked position to its unlocked position,
**characterized in that**:
- each receptacle (70-71; 160; 170) is able to removably receive a paper label and, to this end, includes:
• a transparent wall (90) able to cover the surface of the paper label (40-43) when the latter is received inside the receptacle,
• an openwork pane (86; 164; 172) able to move, with respect to the panel, between:
- an open position in which the pane allows the label received in this receptacle to be replaced with a new label, and
- a closed position in which it prevents the label from being replaced with a new label, while at the same time leaving the identifier of the flat written on this label legible from outside the intercom through the transparent wall (90),
• in its locked position, the electric lock (100) is able to lock the openwork pane (86; 164; 172) in its closed position, and, in its unlocked position, it is able to allow the openwork pane to move, by hand and without a specific tool, to its open position.

2. Intercom according to Claim 1, wherein this intercom includes a plurality of receptacles (70, 72; 160; 170) and the openwork pane (86; 164; 172) of each receptacle is able to move between its open and closed positions independently of the panes of the other receptacles.

3. Intercom according to either one of the preceding claims, wherein each receptacle (70, 72) comprises:
- the transparent wall (90), attached without any degree of freedom to the pane of this receptacle,
- a hinge (98) whose axis of rotation is parallel to a plane in which the panel essentially extends, this hinge mechanically linking the pane to the base of the receptacle such that the pane moves between its open and closed positions by rotating about this axis of rotation, and
- a slot (96), attached without any degree of freedom to a rear face of the pane (86), facing the base of the receptacle when this pane is in its closed position, this slot being able to receive the paper label in a sliding manner and to hold the received paper label behind the transparent wall during the movement of this pane from its open position to its closed position.

4. Intercom according to any one of the preceding claims, wherein the lock (100) includes:
- a retaining part (120) joined to one of the pane and the base of the receptacle,
and
- a hook (122) joined to the other of the pane and the base of the receptacle, this hook being able to move through elastic deformation between:
• an active position in which it bears mechanically on the retaining part (120) so as to lock the pane in its closed position and thus achieve the locked position of the lock, and
• a retracted position in which it is mechanically separated from the retaining part so as to free the pane and thus achieve the unlocked position of the lock, and
- a wire (126) made of shape-memory material and linked mechanically on one side to the hook (122) and on the other side to the base (80) of the receptacle so as to move the hook from its active position to its retracted position when an electric current passes through it.

5. Intercom according to any one of the preceding claims, wherein the intercom includes:
- a human-machine interface (28, 30, 34-37) or a transceiver (58) able to acquire an identifier of an individual present at the intercom, and
- an electronic circuit (60) programmed to trigger the generation of the order to unlock the lock of a receptacle of the intercom only if the acquired identifier matches a pre-recorded identifier of an individual authorized to replace a paper label and, if not, to prevent this unlocking order from being generated.

6. Intercom according to any one of the preceding claims, wherein the intercom comprises the paper label received inside the receptacle.

7. Intercom according to any one of the preceding claims, wherein the transparent wall (90) is able to cover more than 80% of the surface area of the paper label (40-43) when the latter is received inside the receptacle.

8. System for controlling access to a dwelling, this access control system including:
- an intercom (16),
- a human-machine interface able to acquire an identifier of an individual present at the intercom, and
- a remote server (50) connected to the intercom and to the human-machine interface via a long-distance information transmission network (14), this remote server (50) being programmed to trigger the generation of the order to unlock the lock of a receptacle of the intercom only if the acquired identifier matches a pre-recorded identifier of an individual authorized to replace a paper label and, if not, to prevent this unlocking order from being generated,
**characterized in that** the intercom is in accordance with any one of the preceding claims.

9. System according to Claim 8, wherein the system includes a mobile telephone equipped with the human-machine interface.
